# EUROPÄISCHE PATENTSCHRIFT

(11) **EP 0 897 292 B1**
(45) Veröffentlichungstag und Bekanntmachung des Hinweises auf die Patenterteilung: **28.11.2001**
(21) Anmeldenummer: 96946215.9
(22) Anmeldetag: 17.12.1996
(51) Int. Cl.: A61C 8/00

(54) **PASSSYSTEM FÜR DIE EINRICHTUNG EINES KRONENAUFBAUS ODER DERGLEICHEN BEI EINEM ZAHNERSATZ-IMPLANTAT**
FITTING SYSTEM FOR ARRANGING A CROWN RECONSTRUCTION OR THE LIKE FOR A DENTURE IMPLANT
SYSTEME D'ADAPTATION POUR LA MISE EN PLACE D'UNE RECONSTITUTION CORONAIRE OU ANALOGUE POUR UN IMPLANT PROTHETIQUE

(30) Priorität: 30.04.1996 DE 19617209
(43) Veröffentlichungstag der Anmeldung: 24.02.1999
(73) Patentinhaber: IMZ-Fertigungs- und Vertriebsgesellschaft für dentale Technologie mbH, 70794 Filderstadt (DE)
(72) Erfinder: DÜRR, Walter, D-75196 Remchingen (DE); KIRSCH, Axel, D-70184 Stuttgart (DE)
(74) Vertreter: Goddar, Heinz J., Dr.
(86) Internationale Anmeldenummer: DE9602463
(87) Internationale Veröffentlichungsnummer: WO9740772

(56) Entgegenhaltungen:
- EP-A- 0 466 267
- EP-A- 0 506 636
- DE-A- 4 220 431

## Beschreibung

Die Erfindung betrifft ein Paßsystem für die Einrichtung eines Kronenaufbaus bei einem Zahnersatz-Implantat, für das bereits im Kiefer des Patienten Implantatstellen vorbereitet sind, mit einer Kronenbasis, welche eine Grenzfläche zu einem Kronengerüst, wie einem Steg auf dem der Zahnersatz aufzubauen ist, definiert und welche aus einem thermisch zersetzbaren Material besteht.

Sollen bei einem Patienten einer oder mehrere Zähne durch enossale Implantate ersetzt werden, wird der behandelnde Zahnarzt zunächst den Kiefer des Patienten entsprechend vorbereiten, d.h. den Kieferknochen an den Stellen aufbohren, an denen die Implantate gesetzt werden sollen, in die Bohrungen geeignete Grundkörper einsetzen, die mit dem Knochen verwachsen müssen und sodann einen Abdruck der Kiefersituation des Patienten anfertigen, der dann an ein Zahntechnikerlabor gegeben wird, um danach den Kronenaufbau zu fertigen. Ein solcher Abdruck besteht aus Materialien, die unter Umständen beim Aushärten Formveränderungen unterliegen, so daß die Koinzidenz mit der Kiefersituation des Patienten nicht mehr notwendigerweise gegeben ist. Werden nach dem nicht mehr maßgenauen Abdruck die Kronenaufbauten gefertigt, können später beim Einschrauben der Einzelimplantate in die im Kiefer befindlichen Grundkörper Spannungen entstehen, die nicht nur die Implantate, sondern auch den Kiefer des Patienten belasten. Ungenauigkeiten können auch durch den Guß des Metallgerüstes bedingt sein.

Die EP-A-0 506 636 offenbart ein in eine Zahnprothese einsetzbares Paßsystem gemäß dem Oberbegiff von Anspruch 1, das eine Kronenbasis aus einem thermisch zersetzbaren Material und ein Klebebasiselement mit Bereichen an einer Außenumfangsfläche zum Aufnehmen von Klebematerial aufweist. Die Kronenbasis weist einen hohlkegelstumpfförmigen Aufhahmekopf auf, der jeweils entlang einer geschlossenen Linie sowohl an dem koronalen als auch dem zervikalen Endabschnitt des Klebebasiselementes anliegt.

Es ist daher die Aufgabe der Erfindung, ein Paßsystem für die Einrichtung eines Kronenaufbaus oder dergleichen bei einem Zahnersatz-Implantat zur Verfügung zu stellen, mit dem etwaige Maßungenauigkeiten, die beim Abbilden der Kiefersituation eines Patienten auftreten, ausgeglichen werden können.

Diese Aufgabe wird von einem Paßsystem nach Patentanspruch 1 gelöst. Vorteilhafte Ausgestaltungen sind Gegenstand der Unteransprüche.

Erfindungsgemäß umfaßt das Paßsystem neben der Kronenbasis ein Klebebasiselement, das auf die vorbereitete Implantatstelle aufzusetzen ist und das zumindest an seiner Außenumfangsfläche Bereiche zum Aufnehmen von Klebematerial aufweist, wobei die Kronenbasis einen im wesentlichen hohlkegelstumpfförmigen Aufnahmekopf aufweist, der jeweils entlang einer geschlossenen Linie sowohl an dem koronalen als auch an dem zervikalen Endabschnitt des Klebebasiselements anliegt, wobei die Bereiche zum Aufnehmen von Klebematerial zwischen den geschlossenen Linien liegen und durch mindestens einen Hohlraum zwischen der dem Klebebasiselement zugewandten Innenfläche der Kronenbasis und der dieser gegenüberliegenden Außenfläche des Klebebasiselementes definiert sind. Beim Guß des Gerüstes zersetzt sich die Kronenbasis rückstandsfrei, und es verbleibt zwischen Gerüst und Klebebasiselement ein Freiraum, der in der Größenordnung von 0,2 bis 0,4 mm liegt und damit ausreichend ist, um die üblicherweise vorkommenden Maßungenauigkeiten auszugleichen. Das Klebematerial kann ein provisorisches sein, so daß ein beispielsweise in ein Metallgerüst eingeklebtes Klebebasiselement problemlos wieder entfernt werden kann, um etwa notwendige mechanische Nachbehandlungen am Metallgerüst durchzuführen. Nachdem die Lage des Kronenaufbaus nach der Einprobe im Mund endgültig definiert ist, kann der Freiraum beispielsweise mit einem Zwei-Komponenten-Kleber vergossen werden.

Erfindungsgemäß ist vorgesehen, daß der Aufnahmekopf eine Anlageschulter für den koronalen Endabschnitt des Klebebasiselements aufweist. Hiermit wird eine der geschlossenen Linien definiert. Die erfindungsgemäße Anlageschulter weist eine Ringnut auf, so daß nur ein schmaler Ringsteg verbleibt, der die geschlossene Linie definiert.

Es kann die Kronenbasis ein integral mit dem Aufnahmekopf ausgebildetes hohlzylinderförmiges Ansatzstück aufweisen, an dem im Anschlußbereich zum Aufnahmekopf eine der Anlageschulter gegenüberliegende, umlaufende Fase vorgesehen ist. Diese bildet eine Anlage für eine Halteschraube.

Bevorzugt ist die Kronenbasis aus Polyoxymethylen hergestellt.

Das Paßsystem ist weiter dadurch gekennzeichnet, daß die Bereiche für das Klebematerial zumindest eine an der Außenumfangsfläche des Klebebasiselementes angeordnete Kehle aufweisen.

Ferner sollte das Klebebasiselement eine in seiner axialen Richtung verlaufende Durchgangsöffnung aufweisen, so daß es mittels einer Halteschraube auf eine Implantatstelle aufgeschraubt werden kann.

Vorteilhaft weist das Klebebasiselement eine Anlageschulter auf, die der Implantatstelle zugewandt ist. Diese dient einerseits als Ausrichthilfe und nimmt später die auf das Implantat wirkenden Kräfte auf.

Besonders vorteilhaft weist das Klebebasiselement an seinem zervikalen Endabschnitt einen sich in radialer Richtung nach außen erstreckenden Anlagerand auf.

Im folgenden soll die Erfindung anhand der beigefügten Zeichnung näher erläutert werden. Es zeigt
- Figur 1: eine Ausführungsform eines Klebebasiselementes für ein Paßsystem gemäß der vorliegenden Erfindung, teilweise in Schnittansicht;
- Figur 2: eine Ausführungsform einer Kronenbasis für das Paßsystem gemäß der vorliegenden Erfindung in einer Längsschnittansicht;
- Figur 3: eine zweite Ausführungsform einer Kronenbasis für das Paßsystem der vorliegenden Erfindung;
- Figur 4: eine vergrößerte Detailansicht aus Figur 3;
- Figur 5: eine schematische Darstellung dreier Implantate mit einem Kronenaufbau, der unter Verwendung der vorliegenden Erfindung modelliert worden ist; und
- Figur 6: in zwanzig Teilbildern (a) bis (t) den Aufbau eines Steges als Metallgerüst für einen Zahnersatz unter Verwendung der vorliegenden Erfindung.

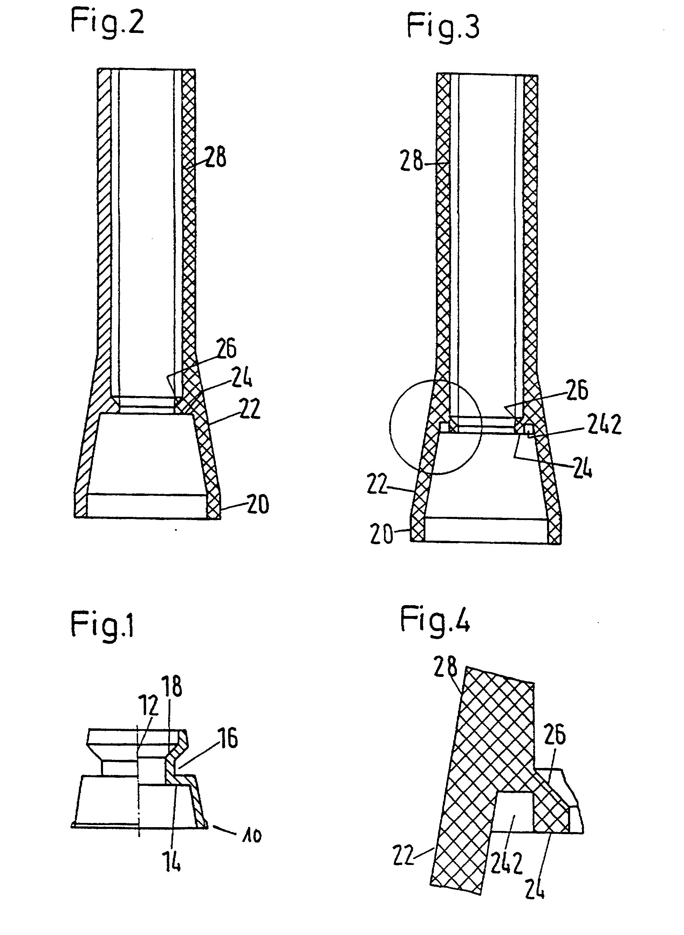

Figur 1 zeigt ein Ausführungsbeispiel eines Klebebasiselementes für ein Paßsystem gemäß der vorliegenden Erfindung, teilweise in Schnittansicht dargestellt. Das vorzugsweise aus Titan bestehende Klebebasiselement ist in seiner Außenkontur im wesentlichen umgekehrt kelchförmig, wobei am Außenumfang eine umlaufende Kehle 16 gebildet ist, in die Klebematerial einzubringen ist. Das Klebebasiselement weist eine Durchgangsöffnung 12 in axialer Richtung auf, wobei diese Durchgangsöffnung 12 am Bereich der Kehle 16 in zervikaler Richtung von einem Auflagerand 14 und in koronaler Richtung von einer Fase 18, an der eine nicht dargestellte Halteschraube zur Anlage kommt, umgeben ist. Am zervikalen Ende ist ein sich in radialer Richtung nach außen erstreckender Anlagerand 10 ausgebildet.

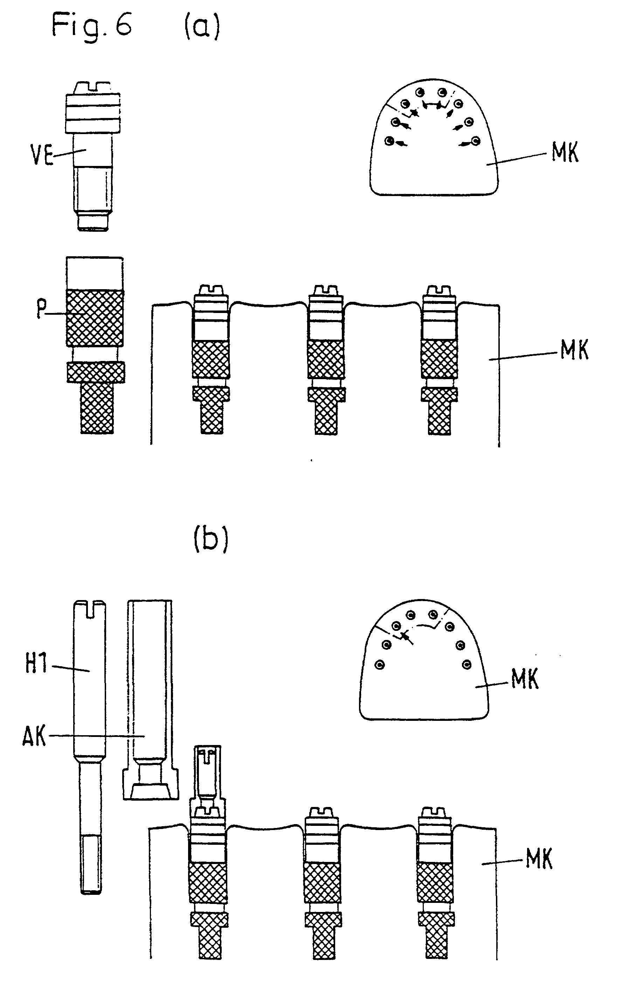

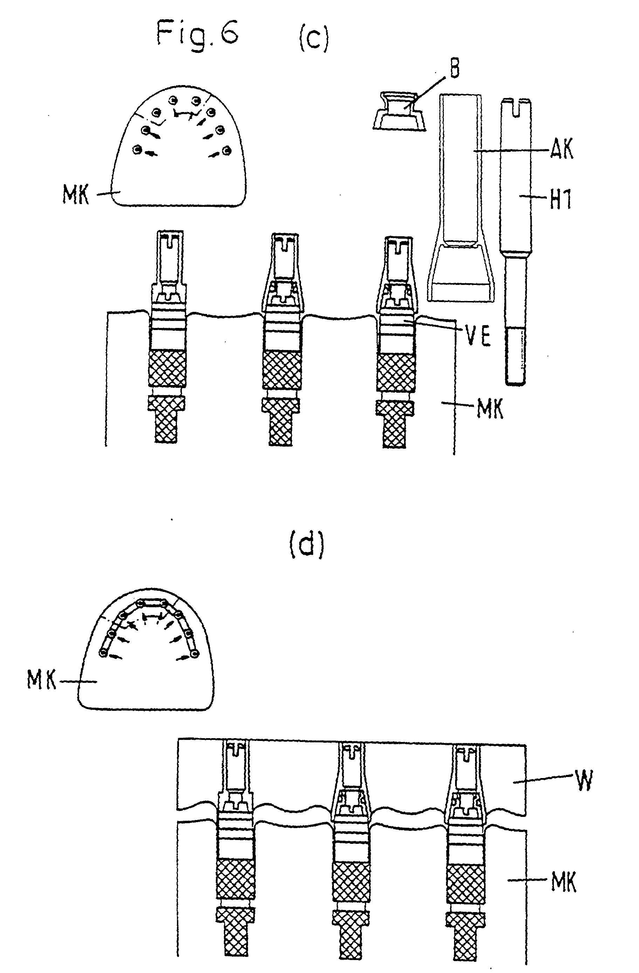

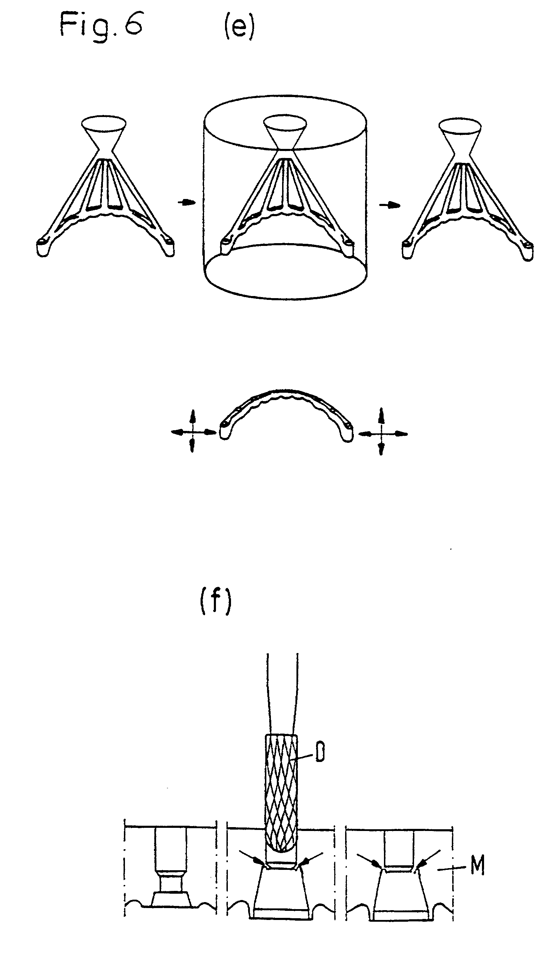

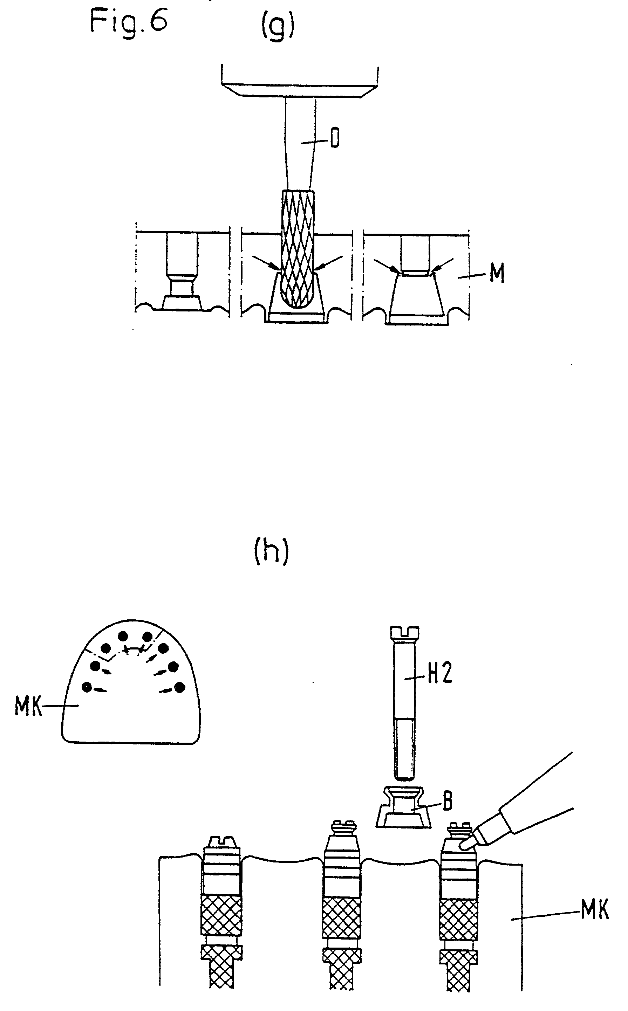

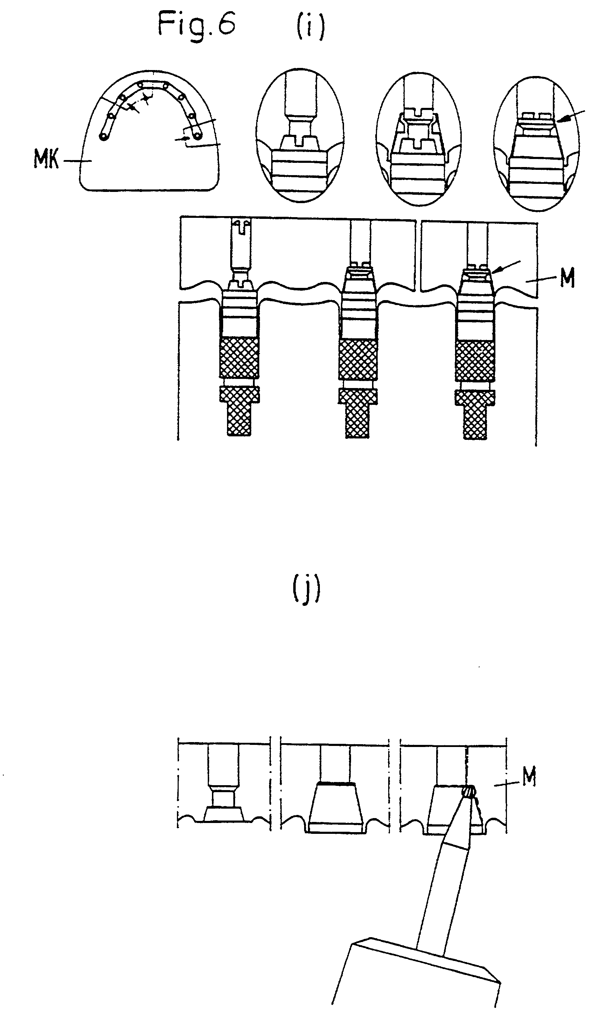

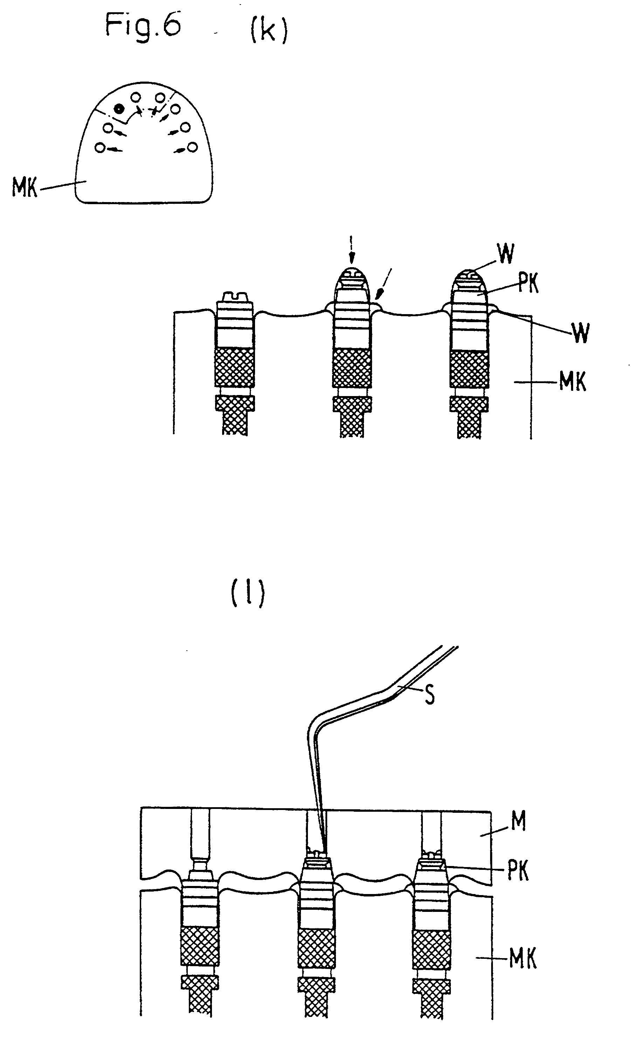

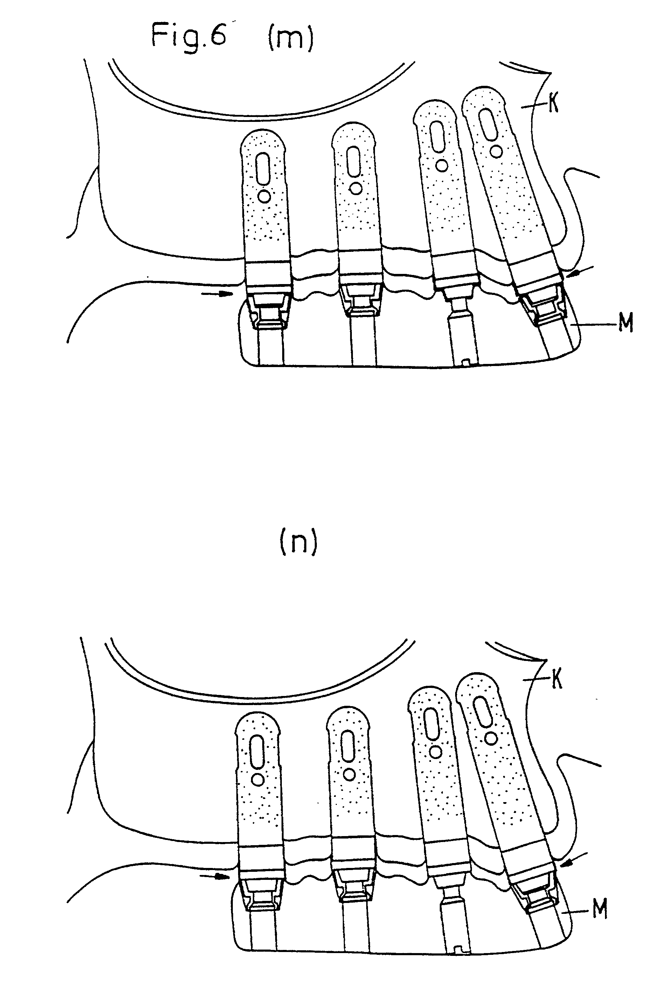

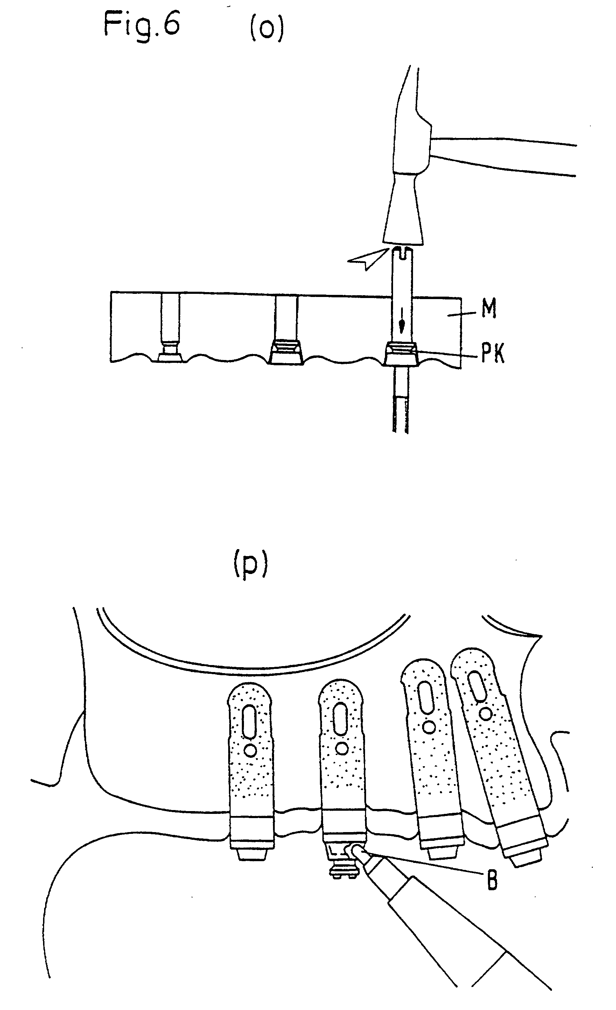

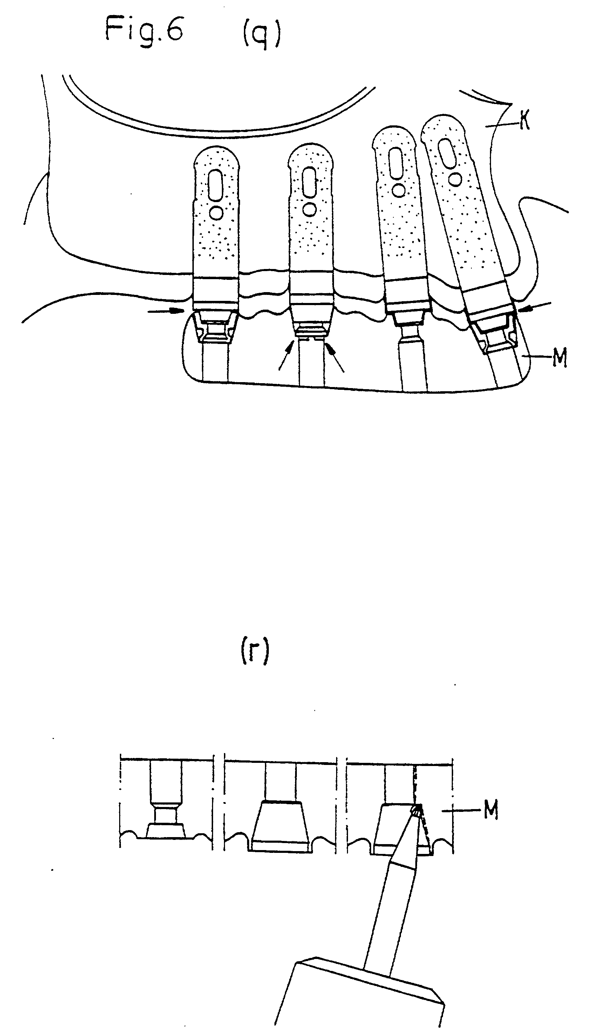

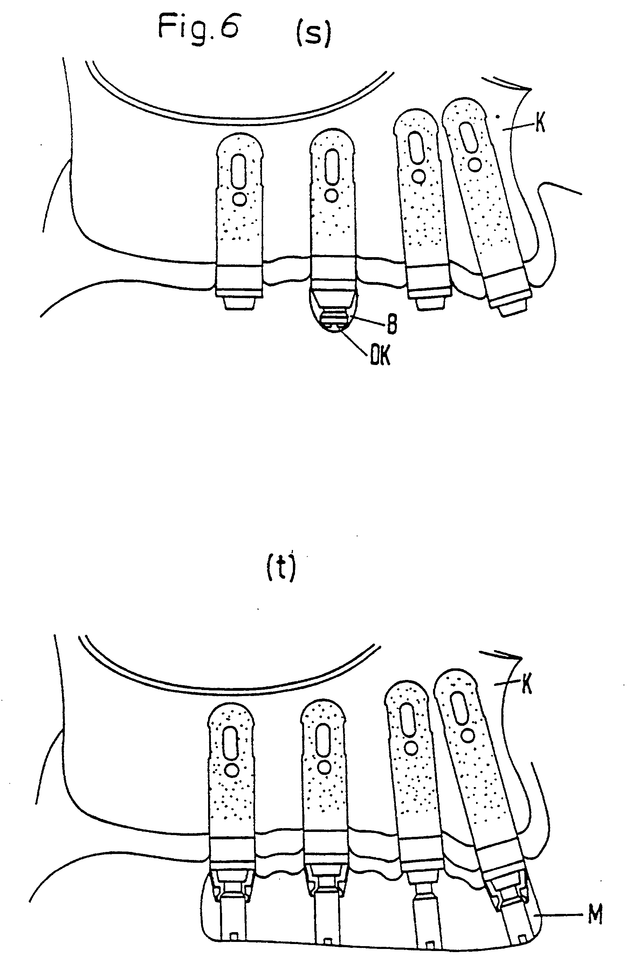

Figur 2 zeigt in einer Längsschnittdarstellung ein Ausführungsbeispiel einer Kronenbasis, die aus zersetzbarem Material besteht, bevorzugt thermisch zersetzbarem Kunststoff, wie Polyoxymethylen. Die Kronenbasis weist einen Aufnahmekopf 22 auf, der an einem Ende (dem zervikalen Ende) offen ist und dort durch einen zylinderförmigen Kontaktring 20 begrenzt ist. Das gegenüberliegende Ende des Aufnahmekopfes 22 ist durch eine Anlageschulter 24 definiert. Einstückig mit dem Aufnahmekopf 22 ausgebildet ist ein Ansatzstück 28, das als Hohlzylinder ausgebildet ist und das in den Anlagekopf 22 im Bereich der ringförmigen Anlageschulter 24 mündet. Die Innenabmessungen des Aufnahmekopfes 22 definieren zusammen mit den Außenabmessungen des Klebebasiselementes nach Figur 1 einen auch als Zementspalt bezeichneten Freiraum, in den, wie später noch erläutert wird, Klebematerial, entweder provisorisch oder endgültig, eingebracht wird. Das Ansatzstück 28 endet im Bereich der Ansatzschulter in einer umlaufenden Fase 26. Diese Fase 26 bildet zusammen mit der Anlageschulter 24 eine Verjüngung des offenen Querschnittes des hohlzylindrischen Ansatzstückes 28 bzw. der gesamten Kronenbasis und dient auch als Selbstzentrierung für eine Halteschraube, mit der die Kronenbasis und das Klebebasiselement auf der Implantatstelle verschraubt werden, wie es später noch im Zusammenhang mit Figur 6 weiter verdeutlicht wird.

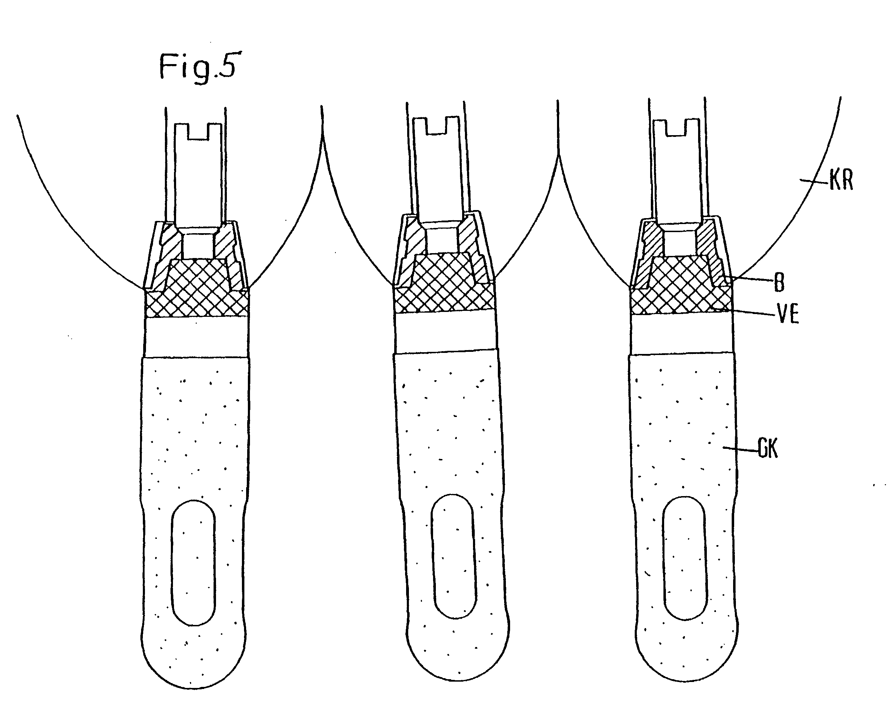

Der Kegelwinkel der Fase 26 kann dabei 90° betragen, wie es in einer in Figur 3 gezeigten Variante der Kronenbasis dargestellt ist. Die Variante unterscheidet sich von dem Aufbau der Figur 2 dahingehend, daß, wie in Figur 4 besonders deutlich dargestellt ist, in der Anlageschulter 24 eine in die zervikale Richtung weisende Ringnut 242 ausgebildet ist. Hier kann zusätzlich Klebematerial aufgenommen werden.

Das Klebebasiselement nach Figur 1 und die Kronenbasis nach Figur 2 oder Figur 3 sind in ihren Abmessungen derart aufeinander abgestimmt, daß der Außendurchmesser des Anlagerandes 10 des Klebebasiselementes dem Innendurchmesser des Kontaktringes 20 entspricht und so eine zirkuläre Kontaktlinie zwischen den beiden Elementen des Paßsystems gebildet wird.

Figur 5 zeigt einen Kronenaufbau mit drei Implantaten, der mit Hilfe des Paßsystems der vorliegenden Erfindung konstruiert worden ist. Auf einem Labormodell des Kiefers waren mit Hilfe von Verbindungselementen VE, als Labor-Connectoren bezeichnet, die Implantatstellen im Kiefer des Patienten nachgebildet worden. Auf jede der Implantatstellennachbildungen des Labormodells wird dann ein Klebebasiselement und eine Kronenbasis aufgesetzt und sodann um die Kronenbasis Suprastruktur des Kronenaufbaus aufgebaut. Beim Guß des Kronengerüstes zersetzt sich die Kronenbasis rückstandsfrei. Wenn die Kronenbasis verloren ist, verbleibt der durch die Geometrie von Kronenbasis und Klebebasiselement B definierte Freiraum bzw. Spalt nun zwischen dem Kronengerüst und dem Klebebasiselement. Dies erlaubt es, daß nachträglich Lagekorrekturen bezüglich der Höhe und des Achsabstandes des Kronenaufbaus vorgenommen werden können. Nachdem die endgültige Lage des Kronenaufbaus festgelegt ist, wird der Freiraum mittels eines Zwei-Komponenten-Klebers vergossen. Ein solcher Verguß kann unter Umständen bereits im Labor stattfinden, aber auch erst im Mund des Patienten. Die Kronen werden dann auf den jeweiligen Grundkörper GK im Kiefer des Patienten aufgeschraubt. Ein Vergleich des Kronenaufbaus an den drei Implantatstellen in den Bereichen zwischen Krone KR und Klebebasiselement B zeigt, welche Toleranzen mit der vorliegenden Erfindung ohne weiteres ausgleichbar sind.

Im folgenden soll anhand der Bildfolge der Figur 6 die Arbeitsweise mit der Erfindung erläutert werden, bei der das durch die Kronenbasis erzeugte Spiel allein nicht für den Toleranzausgleich sorgen kann.

Es wird zunächst wieder die Laborsituation, in der Regel ein Gipsmodell MK, des Kiefers geschaffen, auf den der Zahnersatz, hier vorbereitend ein Metallgerüst, schließlich aufgebracht werden soll. In Teilbild (a) ist das Labormodell MK stark schematisiert in der rechten oberen Ecke veranschaulicht, wobei der strichliert gefaßte Ausschnitt angibt, welche drei Implantatstellen im unteren Bereich des Teilbildes (a) im Detail dargestellt sind. In jedes Positionierelement P, das im linken Bildteil als Einzelbauteil gezeigt ist, ist ein Verbindungselement VE eingeschraubt.

Bei den so vorbereiteten Modell-Implantatstellen wird, wie Teilbild (b) zeigt, bei dem am weitesten links liegenden Implantat die ausbrennbare Kronenbasis AK auf das Verbindungselement VE aufgesetzt und mittels einer Halteschraube H1 aufgeschraubt.

Wie in Teilbild (c) dargestellt ist, wird auf die Verbindungselemente VE der anderen beiden Implantatstellen zunächst ein Titan-Klebebasiselement B (Ausführungsform 10, wie in Figur 1 gezeigt) aufgesetzt, dann die Kronenbasis AK übergeschoben und mit der Halteschraube H1 festgeschraubt. Die Bauteile sind einzeln im rechten oberen Abschnitt des Teilbildes in der Reihenfolge Klebebasiselement - Kronenbasis - Halteschraube dargestellt. Die Kronenbasis AK wird wegen der in ihrem unteren Abschnitt vorgesehenen Verjüngung während der Modellation mit der Schulter des Schraubenkopfes fixiert.

Es werden dann, wie aus Teilbild (d) ersichtlich, die ausbrennbaren Kronenbasen AK mit Wachs W verbunden.

Anschließend wird der Steg modelliert. Nach diesem Modell wird dann das Metallgerüst des Steges gegossen. Dabei wird die aus Kunststoff bestehende Kronenbasis zerstört. In Teilbild (e) ist schematisch angedeutet, daß, beispielsweise bedingt durch den Guß, gewisse Dimensionsveränderungen auftreten. Diese zu korrigieren, gelingt mit der Erfindung in der folgenden Weise.

Zunächst wird, wie in den Teilbildern (f) und (g) angedeutet, die die Situation im Metallgerüst M veranschaulichen, aus dem Metallgerüst M die im Zusammenhang mit Teilbild (c) beschriebene Verjüngung, die durch den Steg innerhalb der Kronenbasis hervorgerufen war, mit einem Bohrer D herausgeschliffen, damit durch die Durchgangsöffnung eine Halteschraube hindurchtreten kann. Dann kann das Metallgerüst M beim Labormodell MK aufgepaßt werden.

Dazu wird, wie Teilbild (h) für das Kiefermodell MK zeigt, auf die mittels einer Halteschraube H2 auf das Verbindungseiement geschraubte Klebebasiselement B eine Farbmarkierung aufgetragen. Durch diese Farbmarkierung zeichnen sich die Stellen ab, an denen Störpunkte auftreten, wenn das Metallgerüst aufgesetzt wird. Durch die Farbe liegt die Information sowohl im Inneren des Metallgerüstes M als auch auf dem Klebebasiselement B vor. Teilbild (i) zeigt durch die Pfeile in den Detaildarstellungen, an welchen Stellen die beschriebenen Störpunkte auftreten können.

Wie in Teilbild (j) zu sehen, werden die markierten Störstellen freigeschliffen, dabei wird gegebenenfalls auch die Öffnung für den Schraubenkopf der Halteschraube erweitert. Im nächsten Schritt, in Teilbild (k) gezeigt, werden die Schraubenköpfe mit Wachs W ausgeblockt, weiter wird rings um dass Implantat, insbesondere um die Verbindungselemente an der Grenzstelle zum Kiefermodell MK, mit Wachs ausgeblockt. Pfeile deuten auf die kritischen Stellen. Auf die Umfangsbereiche der Klebebasiselemente wird ein provisorisches Klebermaterial PK aufgebracht. Das freiliegende Verbindungselement, links in der Detaildarstellung, wird weder versiegelt noch mit Klebematerial versehen.

Das Metallgerüst M wird auf die Klebebasiselemente und auf das freiliegende Verbindungelement aufgesetzt und in diesem verschraubt. Mit einer Sonde S wird, in Teilbild (1) angedeutet, das überschüssige Klebematerial von den Klebebasiselementen oberhalb des Schraubenkopfes aus dem Schraubenkanal entfernt. Das Metallgerüst M ist nun zur Einprobe in den Patientenmund vorbereitet.

Teilbild (m) zeigt das Metallgerüst M am Patientenkiefer K mit den bereits eingewachsenen Implantaten. Dabei scheint das in der Darstellung zweite von links Implantat zu hoch zu sein, denn an den anderen Implantaten entsteht ein Spalt, der bei den beiden außenliegenden jeweils mit einem Pfeil markiert ist. Bei dem zweiten Implantat wird das Verbindungselement bzw. intramobile Element vom Implantat genommen (Teilbild (n)). Das Metallgerüst M sitzt nun paßgenau auf den anderen drei Implantaten auf.

Aus dem Metallgerüst M wird das nicht passende Titan-Klebebasiselement herausgeschlagen (Teilbild (o)). Da zuvor mit einem provisorischen Kleber PK gearbeitet worden ist, kann dieses problemlos vorgenommen werden.

Ein neues Titan-Klebebasiselement B wird auf das wieder eingesetzte intramobile Element des zweiten Implantates aufgeschraubt. Ähnlich wie im Zusammenhang mit Teilbild (h) erläutert, werden auf das Klebebasiselement B Farbmarkierungen angebracht, und es wird am Metallgerüst M nachgeschliffen, bis dieses spannungsfrei paßt (Teilbilder (p), (q), (r)). Mögliche Störpunkte sind in Teilbild (q) mit einem Pfeil gekennzeichnet.

Entsprechend Teilbild (k) wird, wie in Teilbild (s) zu sehen ist, am Patientenkiefer K der Schraubenkopf bei dem neuen Klebebasiselement B mit Wachs verschlossen und Klebemittel aufgetragen. Jetzt kann mit definitivem Klebematerial DK gearbeitet werden, da das Verkleben direkt im Mund und somit spannungsfrei durchgeführt wird. Teilbild (t) zeigt als Ergebnis das spannungsfrei auf dem Patientenkiefer K aufsitzende Metallgerüst M. Nach der Einprobe werden alle Teile im Labor endgültig verklebt. Der Zahnersatz kann nun nach den üblichen Techniken fertiggestellt werden.

## Patentansprüche

1. Paßsystem für die Einrichtung eines Kronenaufbaus bei einem Zahnersatz-Implantat, für das bereits im Kiefer des Patienten Implantatstellen vorbereitet sind, mit
- einer Kronenbasis (AK), welche eine Grenzfläche zu einem Kronengerüst, wie einem Steg (M), auf dem der Zahnersatz aufzubauen ist, definiert, und welche aus einem thermisch zersetzbaren Material besteht, und
- einem Klebebasiselement (B), das auf die vorbereitete Implantatstelle aufzusetzen ist und das zumindest an seiner Außenumfangsfläche Bereiche (16) zum Aufnehmen von Klebematerial aufweist,
wobei die Kronenbasis (AK) einen im wesentlichen hohlkegelstumpfförmigen Aufnahmekopf (22) aufweist, der jeweils entlang einer geschlossenen Linie sowohl an dem koronalen als auch an dem zervikalen Endabschnitt des Klebebasiselements (B) anliegt,
und wobei die Bereiche (16) zum Aufnehmen von Klebematerial zwischen den geschlossenen Linien liegen und durch mindestens einen Hohlraum zwischen der dem Klebebasiselement (B) zugewandten Innenfläche der Kronenbasis (AK) und der dieser gegenüberliegenden Außenfläche des Klebebasiselementes (B) definiert sind, **dadurch gekennzeichnet, daß** der Aufnahmekopf (22) eine Anlageschulter (24) für den koronalen Endabschnitt des Klebebasiselements (B) aufweist, wobei die Anlageschulter (24) eine Ringnut (242) aufweist.

2. Paßsystem nach Anspruch 1, **dadurch gekennzeichnet, daß** die Kronenbasis (AK) ein integral mit dem Aufnahmekopf (22) ausgebildetes hohlzylinderförmiges Ansatzstück (28) aufweist, an dem im Anschlußbereich zum Aufnahmekopf (22) eine der Anlageschulter (24) gegenüberliegende, umlaufende Fase (26) vorgesehen ist.

3. Paßsystem nach Anspruch 1 oder 2, **dadurch gekennzeichnet, daß** die Kronenbasis (AK) aus Polyoxymethylen hergestellt ist.

4. Paßsystem nach einem der Ansprüche 1 bis 3, **dadurch gekennzeichnet, daß** die Bereiche für das Klebematerial zumindest eine an der Außenumfangsfläche des Klebebasiselementes (B) angeordnete Kehle (16) aufweisen.

5. Paßsystem nach einem der Ansprüche 1 bis 4, **dadurch gekennzeichnet, daß** das Klebebasiselement (B) eine in seiner axialen Richtung verlaufende Durchgangsöffnung (12) aufweist.

6. Paßsystem nach einem der Ansprüche 1 bis 5, **dadurch gekennzeichnet, daß** das Klebebasiselement (B) eine Anlageschulter (14) aufweist, die der Implantatstelle zugewandt ist.

7. Paßsystem nach einem der Ansprüche 1 bis 6, **dadurch gekennzeichnet, daß** das Klebebasiselement (B) an seinem zervikalen Endabschnitt einen sich in radialer Richtung nach außen erstreckenden Anlagerand (10) aufweist.

## Claims

1. A system for fitting a crown superstructure on a dental prosthesis implant, positions for the implant being already prepared in the patient's jaw, the system comprising
- a crown base (AK) which defines an interface to a crown-supporting structure such as a web (M) on the dental prosthesis and is made of a thermally decomposable material, and
- an adhesive base element (B) for mounting on the place prepared for the implant and comprising regions (16) for receiving adhesive material, at least on its outer peripheral surface,
wherein the crown base (AK) has a substantially hollow frusto-conical receiving head (22) which abuts both the coronal and the cervical end portion of the adhesive base element (B) along a closed line, and
wherein the regions (16) for receiving adhesive material lie between the closed lines and are defined by at least one cavity between the inner surface of the crown base (AK) facing the adhesive base element (B) and the opposite outer surface of the adhesive base element (B), **characterised in that** the receiving head (22) has an abutment shoulder (24) for the coronal end portion of the adhesive base element (B), wherein the abutment shoulder (24) has an annular groove (242).

2. A system according to claim 1, **characterised in that** the crown base (AK) has a hollow cylindrical attachment member (28) integral with the receiving head (22), a peripheral bevel (26) opposite the abutment shoulder (22) being provided on the attachment member (28) in the connecting region to the receiving head (22).

3. A system according to claim 1 or 2,
**characterised in that** the crown base (AK) is made of polyoxymethylene.

4. A system according to any of claims 1 to 3, **characterised in that** the regions for the adhesive material have at least one channel (16) disposed on the outer peripheral surface of the adhesive base element (B).

5. A system according to any of claims 1 to 4, **characterised in that** the adhesive base element (B) has a passage opening (12) extending in its axial direction.

6. A system according to any of claims 1 to 5, **characterised in that** the adhesive base element (B) has an abutment shoulder (14) facing the place for an implant.

7. A system according to any of claims 1 to 6, **characterised in that** at its cervical end portion, the adhesive base element (B) has an abutment edge (10) extending outwards in the radial direction.

## Revendications

1. Système adaptateur pour l'installation d'une structure de couronne lors de la pose de dents artificielles, lorsque l'emplacement pour la pose dans la mâchoire du patient a déjà été préparé en vue de cette pose, comprenant :
- une base (AK) de couronne qui définit une surface limite pour une structure de support de la couronne telle qu'une barrette (M) sur laquelle les dents artificielles sont posées et qui est constituée par un matériau décomposable par la chaleur et
- un élément de base (B) de fixation qui est destiné à être installé à l'emplacement de pose préparé au préalable et qui présente au moins sur sa surface circonférentielle externe des régions (16) pour recevoir un matériau adhésif,
où la base (AK) de la couronne présente une tête de réception (22) qui a sensiblement la forme d'un cône tronqué et qui repose, suivant une ligne fermée, aussi bien sur la partie en forme de couronne que sur celle en forme de col de la portion terminale de l'élément de base (B) de fixation et
où les régions (16) pour recevoir le matériau adhésif se trouvent entre des lignes fermées et sont définies par un espace creux entre les surfaces internes de la base (AK) de la couronne opposées à l'élément de base (B) de fixation et par les surfaces externes opposées de l'élément de base (B) de fixation,
**caractérisé en ce que** la tête de réception (22) présente une extension en forme d'épaulement (24) pour la portion d'extrémité en forme de couronne de l'élément de base (B) de fixation, cet épaulement (24) présentant une rainure annulaire (242).

2. Système adaptateur selon la revendication 1, **caractérisé en ce que** la base (AK) de la couronne est réalisée d'une pièce avec l'embout cylindrique creux (28) portant la tête de réception (22), la région de jonction avec la tête de réception (22) comportant un région circonférentielle en biais (26), opposée à l'extension en forme d'épaulement (24).

3. Système adaptateur selon la revendication 1 ou la revendication 2, **caractérisé en ce que** la base (AK) de la couronne est réalisée en polyoxyméthylène.

4. Système adaptateur selon l'une des revendications 1 à 3, **caractérisé en ce que** les régions destinées au matériau adhésif présentent au moins une gorge (16) dans la surface circonférentielle externe de l'élément de base (B) de fixation.

5. Système adaptateur selon l'une des revendications 1 à 4, **caractérisé en ce que** l'élément de base (B) de fixation présente une ouverture traversante (12) dans sa direction axiale.

6. Système adaptateur selon l'une des revendications 1 à 5, **caractérisé en ce que** l'élément de base (B) de fixation comporte une extension en forme d'épaulement (14) faisant face à l'emplacement d'implantation.

7. Système adaptateur selon l'une des revendications 1 à 6, **caractérisé en ce que** l'élément de base (B) de fixation présente dans sa section terminale de col, une extension en forme de bride (10) s'étendant radialement vers l'extérieur.
